# EUROPEAN PATENT APPLICATION

(11) **EP 4 725 693 A1**
(43) Date of publication of application: **15.04.2026**
(21) Application number: 24831752.1
(22) Date of filing: 17.06.2024
(51) Int. Cl.: B32B 27/30, B32B 7/022, B65D 65/40

(54) **GAS BARRIER LAMINATE, AND PACKAGING MATERIAL AND VACCUUM HEAT-INSULATING MATERIAL USING SAME**

(30) Priority: 29.06.2023 JP 2023106625
(71) Applicant: Toppan Holdings Inc., Tokyo 110-0016 (JP)
(72) Inventor: KITAHARA, Tsukasa, Tokyo 110-0016 (JP)
(74) Representative: Hasegawa, Kan
(86) International application number: PCT/JP2024/021889
(87) International publication number: WO 2025/004889

(57) **Abstract**

The gas barrier laminate according to the present disclosure has a laminated structure including, in this order, a polyolefin-based substrate layer, a first polyvinyl alcohol-based resin layer, a deposited layer, and a second polyvinyl alcohol-based resin layer, wherein the deposited layer is in direct contact with the first polyvinyl alcohol-based resin layer and the second polyvinyl alcohol-based resin layer, and an indentation hardness by a nanoindenter in a cross section of the second polyvinyl alcohol-based resin layer is 0.5 GPa or less.

## Description

### Technical Field

The present disclosure relates to a gas barrier laminate, and a packaging material and a vacuum insulation material using the same.

### Background Art

Gas barrier laminates combining a plastic film substrate and a deposited layer are widely used as packaging materials for articles requiring blocking of various gases such as water vapor and oxygen. Various improvements have been studied for gas barrier laminates for the purpose of preventing deterioration of gas barrier properties and further improving barrier properties. For example, Patent Literature 1 discloses a gas barrier laminate characterized by having, in this order, a substrate having a polyethylene naphthalate layer, a layer made of a composition including an acrylic polyol and an isocyanate compound, and an inorganic thin film layer.

### Citation List

### Patent Literature

[Patent Literature 1] Japanese Unexamined Patent Publication No. 2013-49266

### Summary of Invention

### Technical Problem

Incidentally, in recent years, due to heightened environmental awareness stemming from the problem of marine plastic waste and the like, further improvement in the efficiency of separate collection and recycling of plastic materials has been demanded. That is, even in packaging materials that have conventionally been improved in performance by combining various different materials, mono-materialization has come to be demanded.

The present inventors selected a polyolefin-based resin as a material excellent in recyclability. However, it has been clarified by the study of the present inventors that when attempting to realize mono-materialization using a polyolefin-based resin, there is room for improvement in barrier properties after bending.

The present disclosure provides a gas barrier laminate that includes a polyolefin-based substrate layer and is excellent in gas barrier properties even after bending. The present disclosure provides a packaging material and a vacuum insulation material using this gas barrier laminate.

### Solution to Problem

In order to solve the above problems, the present disclosure provides the following gas barrier laminate, packaging material, and vacuum insulation material.
[1] A gas barrier laminate having a laminated structure including, in this order:
   a polyolefin-based substrate layer;
   a first polyvinyl alcohol-based resin layer;
   a deposited layer; and
   a second polyvinyl alcohol-based resin layer,
   wherein the deposited layer is in direct contact with the first polyvinyl alcohol-based resin layer and the second polyvinyl alcohol-based resin layer, and
   an indentation hardness by a nanoindenter in a cross section of the second polyvinyl alcohol-based resin layer is 0.5 GPa or less.
[2] The gas barrier laminate according to [1], wherein a ratio (S2/S1) of the indentation hardness (S2) by a nanoindenter in a cross section of the second polyvinyl alcohol-based resin layer to the indentation hardness (S1) by a nanoindenter in a cross section of the first polyvinyl alcohol-based resin layer is 3 to 10.
[3] The gas barrier laminate according to [1] or [2], wherein a thickness of the first polyvinyl alcohol-based resin layer is 0.5 to 2.5 µm.
[4] The gas barrier laminate according to any one of [1] to [3], wherein the second polyvinyl alcohol-based resin layer includes Si.
[5] The gas barrier laminate according to any one of [1] to [4], wherein the second polyvinyl alcohol-based resin layer includes a silane coupling agent.
[6] The gas barrier laminate according to any one of [1] to [5], wherein the deposited layer includes aluminum or silicon oxide.
[7] The gas barrier laminate according to any one of [1] to [6], wherein the polyolefin-based substrate layer and the first polyvinyl alcohol-based resin layer are coextruded layers.
[8] A packaging material including the gas barrier laminate according to any one of [1] to [7].
[9] The packaging material according to [8], which is used for a package subjected to vacuum treatment.
[10] The packaging material according to [8], which is used for a package subjected to freezing treatment.
[11] A vacuum insulation material including the packaging material according to [8].

### Advantageous Effects of Invention

According to the present disclosure, a gas barrier laminate that includes a polyolefin-based substrate layer and is excellent in gas barrier properties even after bending is provided. According to the present disclosure, a packaging material and a vacuum insulation material using this gas barrier laminate are provided.

### Brief Description of Drawings

[FIG. 1] FIG. 1 is a schematic cross-sectional view illustrating a gas barrier laminate according to one embodiment.
[FIG. 2] FIG. 2 is a schematic cross-sectional view illustrating a packaging material according to one embodiment.
[FIG. 3] FIG. 3 is a schematic cross-sectional view illustrating a packaging material according to one embodiment.

### Description of Embodiments

Hereinafter, embodiments of the present disclosure will be described in detail with reference to the drawings as appropriate. However, the present disclosure is not limited to the following embodiments.

The gas barrier laminate according to the present embodiment has a laminated structure including, in this order, a polyolefin-based substrate layer, a first polyvinyl alcohol-based resin layer, a deposited layer, and a second polyvinyl alcohol-based resin layer, wherein the deposited layer is in direct contact with the first polyvinyl alcohol-based resin layer and the second polyvinyl alcohol-based resin layer, and an indentation hardness by a nanoindenter in a cross section of the second polyvinyl alcohol-based resin layer is 0.5 GPa or less.

According to the above gas barrier laminate, it is excellent in gas barrier properties even after bending. The present inventors presume the reason why such an effect is exhibited as follows. That is, since the deposited layer is hard and brittle, it is easily damaged by bending. In the above gas barrier laminate, the deposited layer is in direct contact with the first and second polyvinyl alcohol-based resin layers. Furthermore, the indentation hardness by a nanoindenter in a cross section of the second polyvinyl alcohol-based resin layer is 0.5 GPa or less. As a result, the polyvinyl alcohol-based resin layers play a role as a flexible layer to prevent expansion of cracks in the deposited layer and as a gas barrier layer to fill defects in the deposited layer. Therefore, the above gas barrier laminate is excellent in gas barrier properties even after bending.

Note that, for example, when another layer is provided between the first and second polyvinyl alcohol-based resin layers and the deposited layer, gas that has passed through defects in the deposited layer escapes via the other layer.

Since the above gas barrier laminate uses a polyolefin-based substrate layer as a substrate, it tends to have better slip properties and conveyability compared to the case where EVOH is used as a substrate. In addition, since the above gas barrier laminate uses a polyolefin-based substrate layer as a substrate and is less susceptible to the effects of heat, moisture, and the like, it tends to be excellent in processability.

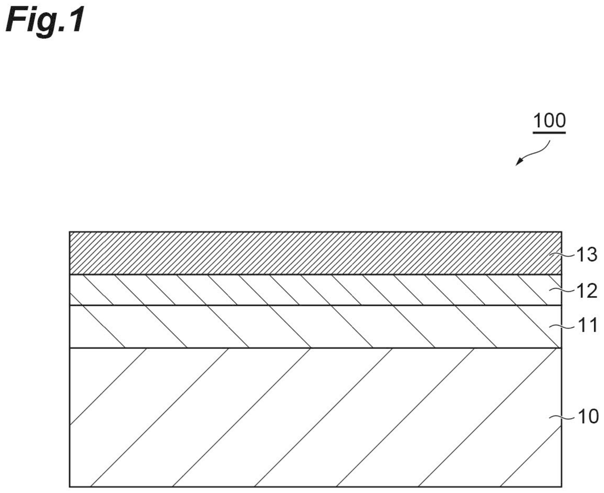

FIG. 1 is a schematic cross-sectional view illustrating a gas barrier laminate according to one embodiment. A gas barrier laminate 100 illustrated in FIG. 1 includes, in this order, a polyolefin-based substrate layer 10, a first polyvinyl alcohol-based resin layer 11, a deposited layer 12, and a second polyvinyl alcohol-based resin layer 13.

### (Polyolefin-Based Substrate Layer)

The polyolefin-based substrate layer (hereinafter also simply referred to as "substrate layer") is a film that serves as a support and includes a polyolefin-based resin.

Examples of the polyolefin-based resin include polyethylene (PE), polypropylene (PP), polybutene (PB), cycloolefin polymer, and the like. In addition, examples of the polyolefin-based resin include acid-modified polyolefins obtained by graft-modifying polyolefins using unsaturated carboxylic acids, acid anhydrides of unsaturated carboxylic acids, esters of unsaturated carboxylic acids, and the like. As raw material monomers during polypropylene synthesis, a small amount of second, third, or other components such as ethylene or butene may be used. The polyolefin-based resin is preferably polyethylene because it has high flexibility, is less likely to break even when including liquid heavy objects, and tends to easily follow the contents and be less likely to deteriorate in gas barrier properties even when used as a packaging material subjected to vacuum treatment. From the viewpoint of excellent heat resistance, a propylene monopolymer film can be used as the substrate layer.

Polyethylene is, for example, low-density polyethylene (LDPE), medium-density polyethylene (MDPE), high-density polyethylene (HDPE), linear low-density polyethylene (L-LDPE), ethylene-vinyl acetate copolymer (EVA), or ethylene-α-olefin copolymer.

The film constituting the substrate layer may be a stretched film or an unstretched film. However, from the viewpoints of impact resistance, heat resistance, water resistance, dimensional stability, and the like, the film constituting the substrate layer may be a stretched film. The stretching method is not particularly limited, and any method may be used as long as a film with stable dimensions can be supplied, such as stretching by inflation, uniaxial stretching, or biaxial stretching. From the viewpoint of excellent tearability regardless of the tearing direction, a biaxially stretched film is preferable.

The thickness of the substrate layer is not particularly limited, but from the viewpoint of obtaining excellent impact resistance and excellent gas barrier properties, it can be 9 to 100 µm, or may be 15 to 30 µm.

The film constituting the substrate layer may be subjected to various pretreatments such as corona treatment, plasma treatment, and flame treatment within a range that does not impair barrier performance, or may be provided with a coating layer such as an adhesion-promoting layer on the laminated surface.

The film constituting the substrate layer may include additives such as an antistatic agent, an ultraviolet absorber, a plasticizer, and a slip agent as necessary.

The content of the polyolefin-based resin in the substrate layer may be 70% by mass or more, 80% by mass or more, 90% by mass or more, or 100% by mass, based on the total amount of the substrate layer.

### (First Polyvinyl Alcohol-Based Resin Layer)

The polyvinyl alcohol-based resin may be any resin having vinyl alcohol units obtained by saponifying vinyl ester units, and examples thereof include polyvinyl alcohol (PVA) and ethylene-vinyl alcohol copolymer (EVOH). From the viewpoints of heat resistance and gas barrier properties, EVOH can be suitably used.

Examples of PVA include resins obtained by polymerizing vinyl esters such as vinyl acetate, vinyl formate, vinyl propionate, vinyl valerate, vinyl caprate, vinyl laurate, vinyl stearate, vinyl pivalate, and vinyl versatate alone and then saponifying them.

The PVA may be a modified PVA that has been copolymerization-modified or post-modified. The copolymerization-modified PVA can be obtained by copolymerizing, for example, a vinyl ester and an unsaturated monomer copolymerizable with the vinyl ester, and then saponifying it. The post-modified PVA can be obtained by copolymerizing an unsaturated monomer with PVA obtained by polymerizing a vinyl ester and then saponifying it in the presence of a polymerization catalyst. The modification amount in the modified PVA can be less than 50 mol% from the viewpoint of exhibiting sufficient gas barrier properties, and can be 10 mol% or more from the viewpoint of obtaining the effect of modification.

Examples of the above unsaturated monomers include olefins such as ethylene, propylene, isobutylene, α-octene, α-dodecene, and α-octadecene; hydroxy group-including α-olefins such as 3-buten-1-ol, 4-pentyn-1-ol, and 5-hexen-1-ol; unsaturated acids such as acrylic acid, methacrylic acid, crotonic acid, maleic acid, maleic anhydride, itaconic acid, and undecylenic acid; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid; vinyl compounds such as alkyl vinyl ether, dimethylallyl vinyl ketone, N-vinylpyrrolidone, vinyl chloride, vinyl ethylene carbonate, 2,2-dialkyl-4-vinyl-1,3-dioxolane, glycerin monoallyl ether, and 3,4-diacetoxy-1-butene; vinylidene chloride, 1,4-diacetoxy-2-butene, vinylene carbonate, polyoxypropylene, polyoxypropylene vinylamine, and the like. From the viewpoint of gas barrier properties, the unsaturated monomer can be an olefin, and may be particularly ethylene.

Examples of the polymerization catalyst include radical polymerization catalysts such as azobisisobutyronitrile, benzoyl peroxide, and lauryl peroxide. The polymerization method is not particularly limited, and bulk polymerization, emulsion polymerization, solvent polymerization, and the like can be employed.

The degree of polymerization of PVA is preferably 300 to 3000. When the degree of polymerization is 300 or more, the barrier properties tend to be further excellent, and when it is 3000 or less, the coating suitability tends to be excellent. The degree of saponification of PVA is preferably 80 mol% or more, more preferably 90 mol% or more, and even more preferably 98 mol% or more. In addition, the degree of saponification of PVA may be 100 mol% or less, or 99.9 mol% or less. The degree of polymerization and the degree of saponification of PVA can be measured in accordance with the method described in JIS K 6726 (1994).

EVOH is generally obtained by saponifying a copolymer of ethylene and an acid vinyl ester such as vinyl acetate, vinyl formate, vinyl propionate, vinyl valerate, vinyl caprate, vinyl laurate, vinyl stearate, vinyl pivalate, or vinyl versatate.

The ethylene unit content of EVOH is 10 mol% or more, more preferably 15 mol% or more, even more preferably 20 mol% or more, and particularly preferably greater than 35 mol%. In addition, the ethylene unit content of EVOH is preferably 65 mol% or less, more preferably 55 mol% or less, and even more preferably less than 50 mol%. When the ethylene unit content is 10 mol% or more, gas barrier properties or dimensional stability under high humidity can be maintained favorably. On the other hand, when the ethylene unit content is 65 mol% or less, gas barrier properties can be enhanced. The ethylene unit content of EVOH can be determined by the NMR method.

Saponification can be performed with an alkali or an acid, but from the viewpoint of saponification rate, an alkali can be used. Examples of the alkali include alkali metal hydroxides such as sodium hydroxide and potassium hydroxide, and alkali metal alkoxides such as sodium ethylate, potassium ethylate, and lithium methylate.

The thickness of the first polyvinyl alcohol-based resin layer is not particularly limited, but from the viewpoints of barrier properties and processability, it can be 0.05 to 5 µm, may be 0.5 to 2.5 µm, and may be 0.3 to 1.5 µm.

The mass per unit area of the first polyvinyl alcohol-based resin layer can be 0.1 to 10 g/m². When this mass is 0.1 g/m² or more, even if the smoothness of the surface of the substrate layer is insufficient, the surface of the first polyvinyl alcohol-based resin layer can be formed sufficiently smooth, and a deposited layer excellent in gas barrier properties can be formed on the surface. On the other hand, when this mass is 10 g/m² or less, it is advantageous in terms of realizing mono-materialization of the packaging material and reducing material costs.

The indentation hardness by a nanoindenter in a cross section of the first polyvinyl alcohol-based resin layer may be 0.05 to 0.1 GPa. The indentation hardness is measured by the method described in Examples described later.

### (Deposited Layer)

The deposited layer is a layer (gas barrier layer) that exhibits gas barrier properties against water vapor and oxygen. The deposited layer may include at least one of a metal and an inorganic oxide. The deposited layer may have a single-layer structure or a laminated structure. The deposited layer includes at least one of a metal deposited layer and an inorganic oxide layer. When the deposited layer includes a metal deposited layer, examples of the metal included in the metal deposited layer include aluminum and stainless steel. When the deposited layer includes an inorganic oxide layer, examples of the inorganic oxide included in the inorganic oxide layer include aluminum oxide, silicon oxide, magnesium oxide, and tin oxide. From the viewpoints of transparency and barrier properties, the inorganic oxide may be selected from the group consisting of aluminum oxide, silicon oxide, and magnesium oxide. In addition, from the viewpoint of excellent tensile stretchability during processing, it is preferable to use a layer using silicon oxide as the inorganic oxide layer. By using an inorganic oxide layer, high barrier properties can be obtained with a very thin layer within a range that does not affect the recyclability of the gas barrier laminate.

The layer thickness of the deposited layer can be 5 to 80 nm. When the layer thickness is 5 nm or more, it becomes easier to obtain sufficient gas barrier properties. In addition, when the layer thickness is 80 nm or less, the occurrence of cracks due to deformation caused by internal stress of the thin film is suppressed, and deterioration of gas barrier properties is easily suppressed. From the above viewpoints, the layer thickness of the deposited layer may be 10 to 50 nm, and may be 20 to 40 nm.

### (Second Polyvinyl Alcohol-Based Resin Layer)

Regarding the polyvinyl alcohol-based resin constituting the second polyvinyl alcohol-based resin layer, the description in the section on the first polyvinyl alcohol-based resin layer can be referred to.

The indentation hardness by a nanoindenter in a cross section of the second polyvinyl alcohol-based resin layer is 0.5 GPa or less, and is preferably less than 0.5 GPa, more preferably 0.4 GPa or less, and even more preferably 0.3 GPa or less, as this provides further excellent gas barrier properties after bending. The indentation hardness of the second polyvinyl alcohol-based resin layer may be 0.05 GPa or more. The indentation hardness is measured by the method described in Examples described later.

The ratio (S2/S1) of the indentation hardness (S2) by a nanoindenter in a cross section of the second polyvinyl alcohol-based resin layer to the indentation hardness (S1) by a nanoindenter in a cross section of the first polyvinyl alcohol-based resin layer is preferably 3 to 10 as this provides further excellent gas barrier properties after bending.

The second polyvinyl alcohol-based resin layer may include Si. Specifically, the second polyvinyl alcohol-based resin layer may be a cured product of a raw material including a polyvinyl alcohol-based resin and a silane compound. Examples of the silane compound include tetraalkoxysilanes such as tetramethoxysilane and tetraethoxysilane, and silazanes such as hexamethyldisilazane. As the silane compound, a compound generally used as a silane coupling agent or a polysiloxane compound having a siloxane bond may be used. Examples of the silane coupling agent include epoxysilane (such as glycidoxypropyltrimethoxysilane), (meth)acrylsilane (such as acryloxypropyltrimethoxysilane), aminosilane, ureidosilane, isocyanatesilane, isocyanuratesilane (such as tris(3-trialkoxysilylpropyl)isocyanurate), and mercaptosilane.

When forming the second polyvinyl alcohol-based resin layer, the amount of the silane compound in the above raw material can be 0.1 to 10 parts by mass, may be 0.5 to 8 parts by mass, and may be 1 to 5 parts by mass, per 1 part by mass of the polyvinyl alcohol-based resin, as this allows for adjustment of the indentation hardness by a nanoindenter in a cross section of the second polyvinyl alcohol-based resin layer and ensures that the obtained gas barrier laminate is excellent in gas barrier properties after bending.

The thickness of the second polyvinyl alcohol-based resin layer is not particularly limited, but from the viewpoints of barrier properties and processability, it can be 0.05 to 2 µm, may be 0.1 to 0.6 µm, or may be 0.2 to 0.5 µm.

### <Method for Producing Gas Barrier Laminate>

The gas barrier laminate can be produced, for example, by a production method including a step of forming a first polyvinyl alcohol-based resin layer on a substrate layer, a step of forming a deposited layer on the first polyvinyl alcohol-based resin layer, and a step of forming a second polyvinyl alcohol-based resin layer on the deposited layer.

### (Step of Forming First Polyvinyl Alcohol-Based Resin Layer)

In this step, a coating solution including a polyvinyl alcohol-based resin and a liquid medium can be used. The coating solution can be obtained, for example, by dissolving a powder of a polyvinyl alcohol-based resin obtained by synthesis in a liquid medium. Examples of the liquid medium include water, dimethyl sulfoxide, dimethylformamide, dimethylacetamide, N-methylpyrrolidone, various glycols, polyhydric alcohols such as trimethylolpropane, and amines such as ethylenediamine and diethylenetriamine. These may be used alone or in combination of two or more. From the viewpoint of reducing environmental impact and the like, water can be used as the liquid medium. In this case, the coating solution can be obtained by dissolving the powder of the polyvinyl alcohol-based resin in high-temperature (for example, 80°C) water.

The content of the polyvinyl alcohol-based resin (solid content) in the coating solution can be 3 to 20% by mass from the viewpoint of maintaining good coatability.

The coating solution may include additives such as isocyanate and polyethyleneimine for improving adhesion. In addition, the coating solution may include additives such as preservatives, plasticizers, alcohols, and surfactants.

The application of the coating solution to the substrate layer can be performed by any appropriate method. The application of the coating solution can be performed, for example, by a wet film formation method such as a gravure coater, a dip coater, a reverse coater, a wire bar coater, or a die coater. The application temperature and drying temperature of the coating solution are not particularly limited, and can be, for example, 50°C or higher.

The first polyvinyl alcohol-based resin layer may be formed on the substrate layer by an extrusion method. In the case of extrusion, multilayer extrusion using a T-die can be employed. Examples of the adhesive that can be used during extrusion include maleic anhydride-modified polypropylene resin.

An adhesive layer may be formed in advance on the substrate layer by coating the above adhesive component on the substrate layer and then drying it.

The thickness of the adhesive layer can be 0.1 to 50 µm, or may be 0.5 to 20 µm, from the viewpoints of adhesiveness, followability, processability, and the like.

The substrate layer and the first polyvinyl alcohol-based resin layer may be coextruded layers formed by a coextrusion method. When these layers are coextruded layers, the laminate tends to obtain adhesion and easily maintain gas barrier properties.

### (Step of Forming Deposited Layer)

The deposited layer can be formed, for example, by vacuum film formation. In vacuum film formation, a physical vapor deposition method or a chemical vapor deposition method can be used. Examples of the physical vapor deposition method include, but are not limited to, a vacuum vapor deposition method, a sputtering method, and an ion plating method. Examples of the chemical vapor deposition method include, but are not limited to, a thermal CVD method, a plasma CVD method, and a photo CVD method.

In the above vacuum film formation, a resistance heating type vacuum vapor deposition method, an EB (Electron Beam) heating type vacuum vapor deposition method, an induction heating type vacuum vapor deposition method, a sputtering method, a reactive sputtering method, a dual magnetron sputtering method, a plasma chemical vapor deposition method (PECVD method), and the like are particularly preferably used. However, considering productivity, the vacuum vapor deposition method is currently the most excellent. As the heating means of the vacuum vapor deposition method, it is preferable to use any one of an electron beam heating method, a resistance heating method, and an induction heating method.

### (Step of Forming Second Polyvinyl Alcohol-Based Resin Layer)

In this step, a coating solution can be used in the same manner as in the step of forming the first polyvinyl alcohol-based resin layer. Regarding the coating solution, the description in the section on the step of forming the first polyvinyl alcohol-based resin layer can be referred to.

The coating solution for forming the second polyvinyl alcohol-based resin layer may include a silane compound. The content of the silane compound in the coating solution may be adjusted so that a desired amount of the silane compound is included relative to the amount of the polyvinyl alcohol-based resin.

When the coating solution includes a silane compound, the coating solution may further include an acid catalyst, an alkali catalyst, a photoinitiator, and the like.

### <Packaging Material>

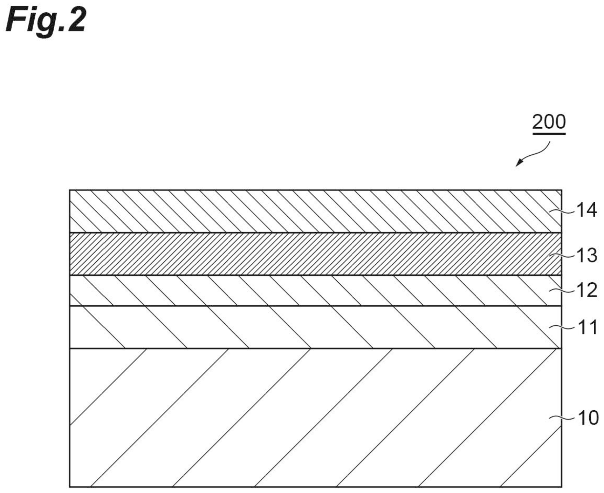

The packaging material includes the above gas barrier laminate and a sealant layer provided on the surface of the gas barrier laminate. Examples of the sealant layer include a layer including a polyolefin-based resin or a polyester-based resin. Examples of the polyolefin-based resin include polyethylene (PE), polypropylene (PP), polybutene (PB), cycloolefin polymer, and the like. In addition, examples of the polyolefin-based resin include acid-modified polyolefins obtained by graft-modifying polyolefins using unsaturated carboxylic acids, acid anhydrides of unsaturated carboxylic acids, esters of unsaturated carboxylic acids, and the like. As raw material monomers during polypropylene synthesis, a small amount of second, third, or other components such as ethylene or butene may be used. The polyolefin-based resin is preferably polyethylene from the viewpoint that it has high flexibility, is less likely to break even when including liquid heavy objects, and tends to easily follow the contents and be less likely to deteriorate in gas barrier properties even when used as a packaging material subjected to vacuum treatment. Polyethylene is, for example, low-density polyethylene (LDPE), medium-density polyethylene (MDPE), high-density polyethylene (HDPE), linear low-density polyethylene (L-LDPE), ethylene-vinyl acetate copolymer (EVA), or ethylene-α-olefin copolymer. FIG. 2 is a schematic cross-sectional view illustrating a packaging material according to one embodiment.

A packaging material 200 illustrated in FIG. 2 includes a gas barrier laminate 100 and a sealant layer 14 provided on the surface of the gas barrier laminate 100 opposite to the substrate layer (on the surface of the second polyvinyl alcohol-based resin layer). For example, when both the substrate layer 10 and the sealant layer 14 are made of a polyolefin-based resin, the content of the polyolefin-based resin can be 90% by mass or more (preferably 95% by mass or more) based on the total mass of the packaging material 200. Such a packaging material 200 can realize mono-materialization. The packaging material 200 is suitably used for a package subjected to vacuum treatment. In vacuum treatment, bending due to the contents occurs in the packaging material. Since the packaging material 200 includes a gas barrier laminate that is excellent in gas barrier properties even after bending, it is excellent in gas barrier properties even after vacuum treatment. In addition, the packaging material 200 is suitably used for a package subjected to freezing treatment. Here, the package includes a packaging bag constituted by the packaging material 200 and contents accommodated in the packaging bag.

Examples of the contents include foods, liquids, pharmaceuticals, electronic components, and heat insulating core materials described later.

When both the substrate layer 10 and the sealant layer 14 are made of polypropylene, the content of polypropylene can be 90% by mass or more (preferably 95% by mass or more) based on the total mass of the packaging material 200. In addition, when both the substrate layer 10 and the sealant layer 14 are made of polyethylene, the content of polyethylene can be 90% by mass or more (preferably 95% by mass or more) based on the total mass of the packaging material 200. The substrate layer 10 and the sealant layer 14 preferably both include polyethylene because they have high flexibility, are less likely to break even when including liquid heavy objects, and tend to easily follow the contents and deteriorate less in gas barrier properties even when used as a packaging material subjected to vacuum treatment.

The content of the polyolefin-based resin in the packaging material 200 is preferably 90% by mass based on the total amount of the packaging material 200.

The packaging material of the present disclosure is not limited to the above embodiment. For example, the packaging material 200 may further include a resin layer between the sealant layer and the gas barrier laminate. Examples of the material constituting such a resin layer include nylon, polyethylene terephthalate, and polyolefin.

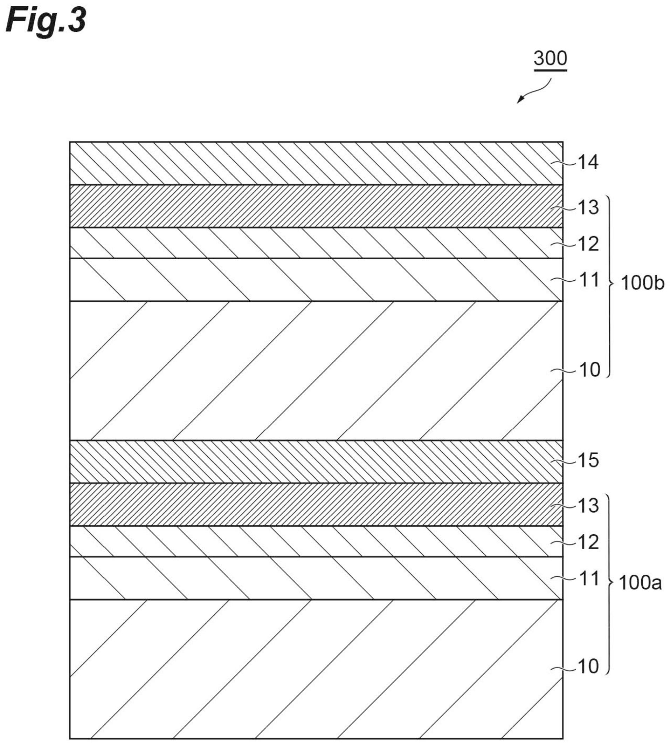

In addition, the packaging material of the present disclosure may further include a gas barrier laminate. A packaging material 300 illustrated in FIG. 3 includes a gas barrier laminate 100a, a resin layer 15, a gas barrier laminate 100b, and a sealant layer 14. The packaging material 300 is suitably used as a vacuum insulation material. The vacuum insulation material includes a packaging bag constituted by the packaging material 300 and a heat insulating core material accommodated in the packaging bag. Examples of the heat insulating core material include glass fiber and rigid urethane.

In the vacuum insulation material, the pressure inside the packaging material 300 may be 10⁵ Pa or less, 10² Pa or less, 10⁻¹ Pa or less, 10⁻⁵ Pa or less, or 10⁻⁸ Pa or less, and may be 10⁻⁸ Pa or more, 10⁻⁵ Pa or more, 10⁻¹ Pa or more, or 10² Pa or more.

The vacuum insulation material can be used, for example, as a member that covers the outer surface of cooling equipment and heat retention equipment to maintain heat insulation, a member that covers the outer surface of cooling containers and heat retention containers to maintain heat insulation, and an outer wall material used in construction applications. Examples of the cooling equipment and heat retention equipment include vending machines, refrigerators, freezers, jar pots, and rice cookers. Examples of the cooling equipment and heat retention equipment include cooler boxes and water bottles. Examples of buildings in which the outer wall material is used include houses and cold storage warehouses.

In the packaging material 300, the gas barrier laminate 100b is arranged such that the second polyvinyl alcohol-based resin layer 13 is on the resin layer 15 side, but the substrate layer 10 may be positioned on the resin layer 15 side.

### Examples

Hereinafter, the present disclosure will be specifically described with reference to Examples, but the present disclosure is not limited to these Examples.

The following materials were prepared.
(Film)
   CPP film: manufactured by Toray Industries, Inc., trade name "Torefan ZK207", thickness 60 µm
   LLDPE film 1: manufactured by Mitsui Chemicals Tohcello, Inc., trade name "TUX-MCS", thickness 60 µm
   LLDPE film 2: manufactured by Mitsui Chemicals Tohcello, Inc., trade name "FCS", thickness 40 µm
   ONY film: manufactured by Unitika Ltd., trade name "Emblem ONM", thickness 15 µm
(Adhesive)
   Manufactured by Mitsui Chemicals SKC Polyurethane Inc., trade name "A525/A52", two-component type
(Coating Solution A)
   Polyvinyl alcohol (trade name: Kuraray Poval 60-98, manufactured by Kuraray Co., Ltd., hereinafter also referred to as "PVA") was prepared into an aqueous solution with a solid content of 5%.
(Coating Solution B)
   Tetraethoxysilane (trade name: KBE04, solid content: 100%, manufactured by Shin-Etsu Chemical Co., Ltd., hereinafter also referred to as "TEOS"), methanol (Kanto Chemical), and 0.1N hydrochloric acid (Kanto Chemical) were mixed at a weight ratio of 17/10/73 to prepare a hydrolyzed solution with a solid content of 5% (weight ratio SiO₂ equivalent).
(Coating Solution C)
   1,3,5-tris(3-methoxysilylpropyl)isocyanurate (silane coupling agent) was prepared into a hydrolyzed solution with a solid content of 5% (weight ratio RSi(OH)₃ equivalent) using a water/IPA = 1/1 solution.

### [First Examination]

### <Preparation of Gas Barrier Laminate>

### (Example 1)

An OPP film (polyolefin-based substrate layer) was formed using a polypropylene monomer resin, and at the same time, an EVOH layer (first polyvinyl alcohol-based resin layer) was formed on the surface of the OPP film by a coextrusion method. The mass per unit area of the EVOH layer was 0.97 g/m².

Using an electron beam heating type vacuum evaporation apparatus, silicon oxide was vapor-deposited on the surface of the first polyvinyl alcohol-based resin layer to form a SiOₓ vapor-deposited film (deposited layer, thickness: 50 nm).

A mixture was obtained by mixing coating solutions A, B, and C. The mixing ratio of coating solutions A, B, and C was adjusted so that the solid content mass ratio of PVA/SiO₂/silane coupling agent (SC agent) was as shown in Table 1. The mixture was applied to the surface of the deposited layer opposite to the first polyvinyl alcohol-based resin layer to form a coating film, and the coating film was dried to form a second polyvinyl alcohol-based resin layer (thickness: 300 nm). Thus, a gas barrier laminate was obtained.

### (Example 2)

A gas barrier laminate was obtained in the same manner as in Example 1, except that instead of the SiOₓ vapor-deposited film, an AL vapor-deposited film (thickness: 50 nm) was formed by vapor-depositing AL on the surface of the first polyvinyl alcohol-based resin layer using an electron beam heating type vacuum evaporation apparatus.

### (Example 3)

A polypropylene film (manufactured by Mitsui Chemicals Tohcello, Inc., trade name "ME-1", thickness: 20 µm) was prepared as a substrate layer. An EVOH solution (manufactured by Mitsubishi Chemical Corporation, trade name: 16DX) was dissolved in a mixed solution of water and IPA to prepare a solution with a solid content of 5% by mass. The obtained solution was applied to the corona-treated surface of the polypropylene film to form a coating film, and the coating film was dried to form a first polyvinyl alcohol-based resin layer (thickness: 0.8 µm). In the same manner as in Example 1, a deposited layer was formed on the surface of the first polyvinyl alcohol-based resin layer, and a second polyvinyl alcohol-based resin layer was formed on the deposited layer to obtain a gas barrier laminate.

### (Example 4)

A gas barrier laminate was obtained in the same manner as in Example 3, except that the mixing ratio of coating solutions A, B, and C (PVA/SiO₂/SC agent) was adjusted to the solid content mass ratio shown in Table 1.

### (Example 5)

A gas barrier laminate was obtained in the same manner as in Example 1, except that a biaxially stretched HDPE (BOPE: Biaxially Oriented Polyethylene) film was used instead of the OPP film as the polyolefin-based substrate layer.

### (Example 6)

A gas barrier laminate was obtained in the same manner as in Example 2, except that a biaxially stretched HDPE film (thickness: 24.2 nm) was used instead of the OPP film as the polyolefin-based substrate layer, and the thickness of the AL vapor-deposited film was 75 nm.

### (Example 7)

A gas barrier laminate was obtained in the same manner as in Example 5, except that the mixing ratio of coating solutions A, B, and C (PVA/SiO₂/SC agent) was adjusted to the solid content mass ratio shown in Table 2.

### (Example 8)

A gas barrier laminate was obtained in the same manner as in Example 6, except that the mixing ratio of coating solutions A, B, and C (PVA/SiO₂/SC agent) was adjusted to the solid content mass ratio shown in Table 2.

### (Comparative Example 1)

A gas barrier laminate was obtained in the same manner as in Example 1, except that the mixing ratio of coating solutions A, B, and C was adjusted to the solid content mass ratio shown in Table 1.

### (Comparative Example 2)

A biaxially stretched EVOH film vapor-deposited with AL (manufactured by Kuraray Co., Ltd., trade name "VM-XL") was used as a gas barrier laminate.

### (Comparative Example 3)

A gas barrier laminate was obtained in the same manner as in Example 1, except that the second polyvinyl alcohol-based resin layer was not formed.

### (Comparative Example 4)

A polypropylene film (thickness: 20 µm) was prepared as a substrate layer. An anchor coat layer was formed on the surface of the substrate layer. Using an electron beam heating type vacuum evaporation apparatus, silicon oxide was vapor-deposited on the surface of the anchor coat layer to form a SiOₓ vapor-deposited film (deposited layer, thickness: 50 nm). A mixture was obtained by mixing coating solutions A, B, and C in the same manner as in Example 1. The mixture was applied to the surface of the deposited layer opposite to the substrate layer to form a coating film, and the coating film was dried to form a second polyvinyl alcohol-based resin layer (thickness: 300 nm). Thus, a gas barrier laminate was obtained.

### (Comparative Example 5)

A gas barrier laminate was obtained in the same manner as in Example 5, except that the mixing ratio of coating solutions A, B, and C (PVA/SiO₂/SC agent) was adjusted to the solid content mass ratio shown in Table 2.

### (Comparative Example 6)

A gas barrier laminate was obtained in the same manner as in Example 5, except that the second polyvinyl alcohol-based resin layer was not formed.

### (Comparative Example 7)

A biaxially stretched HDPE film (thickness: 25 nm) vapor-deposited with AL (thickness: 75 nm) was used as a gas barrier laminate.

### <Measurement of Indentation Hardness>

The indentation hardness of the first and second polyvinyl alcohol-based resin layers of the gas barrier laminates obtained in each Example and Comparative Example was measured. The indentation hardness was measured by the nanoindentation method. The nanoindentation method is a measurement method in which a quasi-static indentation test is performed on a target measurement object to obtain the mechanical properties of the sample.

The measurement sample (cross-sectional sample) was prepared as follows. That is, after corona treatment was performed on both surfaces of the gas barrier laminate, it was embedded in a visible light curable resin D-800. Then, using an ultramicrotome Leica EM UC7, the gas barrier laminate was cut perpendicular to the lamination direction with a diamond knife Microstar LH. The exposed cross section was subjected to finishing treatment under the conditions of cutting thickness Feed 100 nm and cutting speed Speed 1 mm/s to obtain a measurement sample.

For the measurement, Hysitron TI-Premier (trade name) manufactured by Bruker Japan Co., Ltd. was used as a measuring device, and a Berkovich-type diamond indenter manufactured by Bruker Japan Co., Ltd. was used as an indenter. The measurement conditions were as follows.
Temperature: room temperature (25°C).
Mode: load control mode.
Indentation and unloading: Indentation was performed at an indentation speed of 1.5 µN/second to a load of 15 µN, held at the maximum load for 5 seconds, and then unloaded at a speed of 1.5 µN/second.
Measurement location: A shape image of the cross section of the second polyvinyl alcohol-based resin layer was obtained by the shape measurement function of the measuring device that scans the sample surface with an indenter, and 20 points were designated on the cross section of the second polyvinyl alcohol-based resin layer from the shape image at intervals of 1 µm or more.

In calculating the indentation hardness, fused quartz was used as a standard sample to calibrate in advance the relationship between the contact depth between the indenter and the sample and the contact projected area. Thereafter, the unloading curve in the 60 to 95% region with respect to the maximum load during unloading was analyzed by the Oliver-Pharr method to calculate the indentation hardness.

### <Evaluation of Slip Properties of Gas Barrier Laminate>

For the gas barrier laminates of each Example and Comparative Example, the coefficient of dynamic friction between the main surface on the substrate layer side and the main surface on the opposite side was measured. The measurement was performed in accordance with JIS K 7125 with a test width of 80 × 200 mm, a contact area of the sliding piece of 40 cm², and a sliding speed of 100 mm/min. The measured values (unit: µD) were evaluated according to the following criteria. The results are shown in Tables 1 and 2.

### (Criteria)

A: Measured value is 1.0 µD or less
B: Measured value exceeds 1.0 µD or the laminate does not slide and zippering occurs, making measurement impossible

### <Conveyability>

A first original roll was prepared by winding the gas barrier laminate (width: 500 mm) of each Example and Comparative Example. The gas barrier laminate was sent out from the original roll by roll-to-roll and wound up as a second original roll. The feeding speed was 50 m/min. When wrinkles occurred in the second original roll, it was evaluated as "B", and when no wrinkles occurred, it was evaluated as "A". The results are shown in Tables 1 and 2.

### <Mass Ratio of Polyolefin-Based Resin>

### (Examples 1 to 4, Comparative Examples 1 to 4)

The gas barrier laminates of each Example and Comparative Example and a CPP film (sealant layer, manufactured by Mitsui Chemicals Tohcello, Inc., trade name "TUX-MCS", thickness: 60 µ) were dry-laminated with a two-component curable adhesive (manufactured by Mitsui Chemicals, trade names "A525" and "A50") having a thickness of 3 µ to obtain a laminate film. The surface of the gas barrier laminate opposite to the substrate layer and the CPP film were bonded so as to face each other.

The mass ratio of the polyolefin-based resin (polypropylene) in the laminate film was determined from the masses of the gas barrier laminate, the CPP film (thickness: 60 µ), and the adhesive (thickness: 3 µ). The results are shown in Table 1.

### (Examples 5 to 8, Comparative Examples 5 to 7)

The mass ratio of the polyolefin-based resin (polyethylene) in the laminate film was determined in the same manner as in Examples 1 to 4 and Comparative Examples 1 to 4, except that LLDPE film 1 was used instead of the CPP film as the sealant layer. The results are shown in Table 2.

### <Oxygen Permeability Measurement (Initial)>

### (Examples 1 to 4, Comparative Examples 1 to 4)

The gas barrier laminates of each Example and Comparative Example and a CPP film (sealant layer) were dry-laminated with an adhesive to obtain a laminate film. The surface of the gas barrier laminate opposite to the substrate layer and the CPP film were bonded so as to face each other. The oxygen permeability of the laminate film was measured. The measurement was performed using an oxygen permeability measuring device (manufactured by Modern Control, OXTRAN 2/20) under conditions of a temperature of 30°C and a relative humidity of 70%. The measurement method was in accordance with JIS K-7126, Method B (isobaric method), and ASTM D3985-81. The results are shown in Table 1. The measured values are expressed in units of [cc/m²·day·atm].

### (Examples 5 to 8, Comparative Examples 5 to 7)

The oxygen permeability was measured in the same manner as in Examples 1 to 4 and Comparative Examples 1 to 4, except that LLDPE film 1 was used instead of the CPP film as the sealant layer. The results are shown in Table 2.

### <Water Vapor Permeability Measurement (Initial)>

Laminate films were obtained using the gas barrier laminates of each Example and Comparative Example in the same manner as in the oxygen permeability measurement (initial). The water vapor permeability of the laminate films was measured. The measurement was performed using an oxygen permeability measuring device (manufactured by Modern Control, PERMATRAN 3/31) under conditions of a temperature of 40°C and a relative humidity of 90%. The measurement method was in accordance with JIS K-7126, Method B (isobaric method), and ASTM D3985-81. The results are shown in Tables 1 and 2. The measured values are expressed in units of [g/m²·day].

### <Lamination Strength>

Laminate films were obtained using the gas barrier laminates of each Example and Comparative Example in the same manner as in the oxygen permeability measurement (initial). The lamination strength of the laminate films was measured. The measurement was performed in accordance with JIS K6854 with a test width of 15 mm, a peeling speed of 300 mm/min, and a peeling angle of 180°. The results are shown in Tables 1 and 2. The measured values are expressed in units of [N/15 mm].

### <Bending Test>

Laminate films were obtained using the gas barrier laminates of each Example and Comparative Example in the same manner as in the oxygen permeability measurement (initial). Test pieces of 210 mm × 297 mm were cut out from the laminate films. Both ends of the test pieces were bonded together to form a cylindrical shape. Both ends of the cylindrical test pieces were held by a fixed head and a drive head. The following steps 1 to 4 were performed as one cycle for 100 cycles at 25°C. The cycles were performed at a speed of 40 cycles/min. The oxygen permeability after the bending test was measured in the same manner as in the oxygen permeability measurement (initial). The water vapor permeability after the bending test was measured in the same manner as in the water vapor permeability measurement (initial).

Step 1: While applying a twist of 440 degrees to the test piece, the distance between the fixed head and the drive head is narrowed from 7 inches to 3.5 inches.
Step 2: While keeping the test piece twisted, the distance between the heads is narrowed to 1 inch.
Step 3: The distance between the heads is widened to 3.5 inches.
Step 4: While returning the twist, the distance between the heads is widened to 7 inches.

**[Table 1]**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Substrate layer | Material | OPP | OPP | OPP | OPP | OPP | EVOH | OPP | OPP |
| | Thickness (µm) | 17.2 | 17.2 | 20 | 17.2 | 18 | 12 | 17.2 | 20 |
| First PVA-based resin layer | Material | EVOH | EVOH | EVOH | EVOH | EVOH | - | EVOH | - |
| | Mass per unit area (g/m²) | 1.0 | 1.0 | 1.0 | 1.0 | 1.2 | - | 1.0 | - |
| | Thickness (µm) | 0.8 | 0.8 | 0.8 | 0.8 | 1.0 | - | 0.8 | - |
| | Indentation hardness (GPa) | 0.06 | 0.06 | 0.06 | 0.06 | 0.06 | - | 0.06 | 0.06 |
| Method of forming substrate layer and first PVA-based resin layer | | Coextrusion | Coextrusion | Coating | Coating | Coextrusion | - | Coextrusion | - |
| Deposited layer | Material | SiOₓ | AL | SiOₓ | SiOₓ | SiOₓ | AL | SiOₓ | SiOₓ |
| | Thickness (nm) | 50 | 50 | 50 | 50 | 50 | 75 | 50 | 50 |
| Second PVA-based resin layer | PVA/SiO₂/SC (solid content mass ratio) | 45/45/10 | 45/45/10 | 45/45/10 | 30/60/10 | 20/70/10 | - | - | 45/45/10 |
| | Thickness (µm) | 0.3 | 0.3 | 0.3 | 0.3 | 0.3 | - | - | 0.3 |
| | Indentation hardness (GPa) | 0.3 | 0.3 | 0.3 | 0.5 | 0.8 | - | - | 0.3 |
| Sealant layer | Material | CPP | CPP | CPP | CPP | CPP | CPP | CPP | CPP |
| | Thickness (µm) | 60 | 60 | 60 | 60 | 60 | 60 | 60 | 60 |
| Hardness ratio (S2/S1) | | 5.0 | 5.0 | 5.0 | 8.3 | 13.3 | - | - | 5.0 |
| Slip property | Coefficient of dynamic friction (µD) | 0.5 | 0.5 | 0.5 | 0.5 | 0.5 | >5 | 0.5 | 0.5 |
| | Evaluation | A | A | A | A | A | B | A | A |
| Conveyability | | A | A | A | A | A | B | A | A |
| Content of polyolefin-based resin (mass%) | | 94 | 94 | 94 | 94 | 94 | 76 | 94 | 94 |
| Oxygen permeability (cc/m²·day·atm) | | 0.3 | 0.3 | 0.2 | 0.2 | 0.2 | 0.4 | 0.5 | 0.3 |
| Water vapor permeability (g/m²·day) | | 0.4 | 0.4 | 1.0 | 0.4 | 0.9 | 2.6 | 0.5 | 0.4 |
| Lamination strength (N/15mm) | | 3.2 | 1.5 | 0.5 | 3.3 | 3.5 | 2.0 | 3.3 | 3.5 |
| Oxygen permeability after bending test (cc/m²·day·atm) | | 0.8 | 0.8 | 0.2 | 1.5 | 3.8 | 1.4 | 5.9 | 3.8 |
| Water vapor permeability after bending test (g/m²·day) | | 0.5 | 0.4 | 1.0 | 0.6 | 0.9 | 3.9 | 0.9 | 0.6 |

**[Table 2]**

| | | Example 5 | Example 6 | Example 7 | Example 8 | Comparative Example 5 | Comparative Example 6 | Comparative Example 7 |
|---|---|---|---|---|---|---|---|---|
| Substrate layer | Material | BOPE | BOPE | BOPE | BOPE | BOPE | BOPE | BOPE |
| | Thickness (µm) | 24.2 | 24.2 | 24.2 | 24.2 | 24.2 | 24.2 | 25 |
| First PVA-based resin layer | Material | EVOH | EVOH | EVOH | EVOH | EVOH | EVOH | - |
| | Mass per unit area (g/m²) | 1.0 | 1.0 | 1.0 | 1.0 | 1.0 | 1.0 | - |
| | Thickness (µm) | 0.8 | 0.8 | 0.8 | 0.8 | 0.8 | 0.8 | - |
| | Indentation hardness (GPa) | 0.06 | 0.06 | 0.06 | 0.06 | 0.06 | 0.06 | - |
| Method of forming substrate layer and first PVA-based resin layer | | Coextrusion | Coextrusion | Coextrusion | Coextrusion | Coextrusion | Coextrusion | - |
| Deposited layer | Material | SiOₓ | AL | SiOₓ | AL | SiOₓ | SiOₓ | AL |
| | Thickness (nm) | 50 | 75 | 50 | 75 | 50 | 50 | 75 |
| Second PVA-based resin layer | PVA/SiO₂/SC (solid content mass ratio) | 45/45/10 | 45/45/10 | 30/60/10 | 30/60/10 | 20/70/10 | - | - |
| | Thickness (µm) | 0.3 | 0.3 | 0.3 | 0.3 | 0.3 | - | - |
| | Indentation hardness (GPa) | 0.3 | 0.3 | 0.5 | 0.5 | 0.8 | - | - |
| Sealant layer | Material | LL1 | LL1 | LL1 | LL1 | LL1 | LL1 | LL1 |
| | Thickness (µm) | 60 | 60 | 60 | 60 | 60 | 60 | 60 |
| Hardness ratio (S2/S1) | | 5.0 | 5.0 | 8.3 | 8.3 | 13.3 | - | - |
| Slip property | Coefficient of dynamic friction (µD) | 0.5 | 0.5 | 0.5 | 0.5 | 0.5 | 0.5 | 0.5 |
| | Evaluation | A | A | A | A | A | A | A |
| Conveyability | | A | A | A | A | A | A | A |
| Content of polyolefin-based resin (mass%) | | 94 | 94 | 94 | 94 | 94 | 95 | 96 |
| Oxygen permeability (cc/m²·day·atm) | | 0.3 | 0.2 | 0.3 | 0.2 | 0.6 | 0.5 | 8.4 |
| Water vapor permeability (g/m²·day) | | 0.5 | 0.4 | 0.5 | 0.4 | 0.7 | 0.5 | 0.5 |
| Lamination strength (N/15mm) | | 1.8 | 0.9 | 2.0 | 1.2 | 1.9 | 2.1 | 1.8 |
| Oxygen permeability after bending test (cc/m²·day·atm) | | 0.9 | 0.3 | 1.6 | 1.3 | 3.1 | 7.2 | 18.2 |
| Water vapor permeability after bending test (g/m²·day) | | 0.6 | 0.4 | 0.8 | 0.5 | 0.8 | 0.5 | 0.8 |

### [Second Examination]

### <Production of Laminate Film>

### (Example 1A)

A gas barrier laminate was obtained in the same manner as in Example 1 of the first examination. The gas barrier laminate and a CPP film (sealant layer) were dry-laminated with an adhesive to obtain a laminate film. The surface of the gas barrier laminate on the second polyvinyl alcohol-based resin layer side and the CPP film were bonded so as to face each other.

### (Example 1B)

A laminate film was obtained in the same manner as in Example 1A, except that LLDPE film 1 was used instead of the CPP film.

### (Example 1C)

A gas barrier laminate was obtained in the same manner as in Example 1 of the first examination. The gas barrier laminate and an ONY film were dry-laminated with an adhesive to obtain a laminate. The surface of the gas barrier laminate on the second polyvinyl alcohol-based resin layer side and the ONY film were bonded so as to face each other. Next, the surface of the laminate on the ONY film side and LLDPE film 1 were dry-laminated using an adhesive to obtain a laminate film.

### (Comparative Example 3A)

A laminate film was obtained in the same manner as in Example 1A, except that the gas barrier laminate of Comparative Example 3 was used instead of the gas barrier laminate of Example 1.

### <Gas Barrier Properties After Vacuum Treatment>

The laminate films of each Example and Comparative Example were cut out to a size of 315 mm long × 230 mm wide. These were folded in half and heat-sealed on three sides to produce a pouch having an opening. Marbles with a diameter of 1 cm to 2 cm were placed in this pouch. Next, a package subjected to vacuum treatment was obtained using a small chamber-type vacuum packaging machine. The package was opened after 1 hour. The oxygen permeability and water vapor permeability of the packaging bag after opening were measured in the same manner as in the oxygen permeability measurement (initial) and water vapor permeability measurement (initial). The results are shown in Table 3.

### <Gas Barrier Properties After Vacuum Treatment and Boiling Treatment>

The laminate films of each Example and Comparative Example were cut out to a size of 315 mm long × 230 mm wide. These were folded in half and heat-sealed on three sides to produce a pouch having an opening. Marbles with a diameter of 1 cm to 2 cm were placed in this pouch. Next, a package subjected to vacuum treatment was obtained using a small chamber-type vacuum packaging machine. The package was opened after 10 minutes, filled with water, and the opening was heat-sealed to obtain a package. The package was subjected to boiling treatment at 90°C for 3 minutes. The oxygen permeability and water vapor permeability of the packaging bag after boiling treatment were measured in the same manner as in the oxygen permeability measurement (initial) and water vapor permeability measurement (initial). The results are shown in Table 3.

### <Presence or Absence of Discoloration of Food After Vacuum Treatment and Freezing Treatment>

The laminate films of each Example and Comparative Example were cut out to a size of 315 mm long × 230 mm wide. These were folded in half and heat-sealed on three sides to produce a pouch having an opening. This pouch was filled with red fish meat (yellowtail) and subjected to vacuum treatment to obtain a package. The package was stored at -25°C for 1 month. Photographs of the package before and after storage were visually compared. Those with no change in the color of the red fish meat were rated as "A", and those that turned brown due to freezer burn were rated as "B". The results are shown in Table 3.

**[Table 3]**

| | | Example 1A | Example 1B | Example 1C | Comparative Example 3A |
|---|---|---|---|---|---|
| Initial | Oxygen permeability (cc/m²·day·atm) | 0.3 | 0.3 | 0.2 | 0.5 |
| | Water vapor permeability (g/m²·day) | 0.4 | 0.4 | 0.3 | 0.5 |
| After vacuum treatment | Oxygen permeability (cc/m²·day·atm) | 0.3 | 0.3 | 0.3 | 4.5 |
| | Water vapor permeability (g/m²·day) | 0.4 | 0.4 | 0.5 | 2.7 |
| After vacuum treatment and boiling treatment | Oxygen permeability (cc/m²·day·atm) | 0.6 | 0.6 | 0.6 | >10 |
| | Water vapor permeability (g/m²·day) | 0.9 | 0.9 | 0.9 | 3.5 |
| Presence or absence of discoloration of food after vacuum treatment and freezing treatment | | A | A | A | B |

### [Third Examination]

### (Example 1D)

Two gas barrier laminates were obtained in the same manner as in Example 1 of the first examination. The second polyvinyl alcohol-based resin layer of the first gas barrier laminate of Example 1 and an ONY film were dry-laminated with an adhesive to obtain a first laminate. Next, the surface of the first laminate on the ONY film side and the surface of the second gas barrier laminate of Example 1 on the second polyvinyl alcohol-based resin layer side were dry-laminated using an adhesive to obtain a second laminate. The surface of the second laminate on one substrate layer side and LLDPE film 2 were dry-laminated with an adhesive to obtain a laminate film.

### (Comparative Example 3B)

A laminate film was obtained in the same manner as in Example 1D, except that the gas barrier laminate of Comparative Example 3 was used instead of the gas barrier laminate of Example 1.

### <Evaluation of Vacuum Insulation Material>

Vacuum insulation materials were produced from the laminate films of Example 1D and Comparative Example 3B. Specifically, two laminate films (size: 300 mm × 300 mm) were prepared for each. The laminate films were opposed to each other and heat-sealed on three sides to obtain a packaging bag for accommodating a heat insulating core material with only one side open. A glass fiber (290 × 290 mm) that had been subjected to drying treatment (temperature: 120°C, time: 1 hour) was prepared as a heat insulating core material. The glass fiber was accommodated in the packaging bag. The internal space of the packaging bag was degassed to set the pressure inside the bag to 1.0 Pa, and then the opening of the bag was heat-sealed and sealed. Thus, a vacuum insulation material (thickness: 5 mm, length: 300 mm, width: 300 mm) was obtained.

The vacuum insulation material was stored at 60°C for 2 weeks. The thermal conductivity of the vacuum insulation material before and after storage was measured. The thermal conductivity was measured by the heat flow meter method using a thermal conductivity measuring device (manufactured by Eiko Seiki Co., Ltd., trade name "HC-074") in accordance with JIS-A-1412-3. The thermal conductivity before storage of Example 1D and Comparative Example 3B was 0.005 [W/M·K] in both cases. The thermal conductivity after storage of Example 1D remained unchanged from before storage at 0.005 [W/M·K]. On the other hand, the thermal conductivity after storage of Comparative Example 3B was a value larger than 0.005 [W/M·K].

### Reference Signs List

- 10:: substrate layer

- 11:: first polyvinyl alcohol-based resin layer
- 12:: deposited layer
- 13:: second polyvinyl alcohol-based resin layer
- 100:: gas barrier laminate
- 200, 300:: packaging material

## Claims

1. A gas barrier laminate having a laminated structure comprising, in this order:
a polyolefin-based substrate layer;
a first polyvinyl alcohol-based resin layer;
a deposited layer; and
a second polyvinyl alcohol-based resin layer,
wherein the deposited layer is in direct contact with the first polyvinyl alcohol-based resin layer and the second polyvinyl alcohol-based resin layer, and
an indentation hardness by a nanoindenter in a cross section of the second polyvinyl alcohol-based resin layer is 0.5 GPa or less.

2. The gas barrier laminate according to claim 1, wherein a ratio (S2/S1) of the indentation hardness (S2) by a nanoindenter in a cross section of the second polyvinyl alcohol-based resin layer to the indentation hardness (S1) by a nanoindenter in a cross section of the first polyvinyl alcohol-based resin layer is 3 to 10.

3. The gas barrier laminate according to claim 1, wherein a thickness of the first polyvinyl alcohol-based resin layer is 0.5 to 2.5 µm.

4. The gas barrier laminate according to claim 1, wherein the second polyvinyl alcohol-based resin layer includes Si.

5. The gas barrier laminate according to claim 1, wherein the second polyvinyl alcohol-based resin layer includes a silane coupling agent.

6. The gas barrier laminate according to claim 1, wherein the deposited layer includes aluminum or silicon oxide.

7. The gas barrier laminate according to claim 1, wherein the polyolefin-based substrate layer and the first polyvinyl alcohol-based resin layer are coextruded layers.

8. A packaging material comprising the gas barrier laminate according to any one of claims 1 to 7.

9. The packaging material according to claim 8, which is used for a package subjected to vacuum treatment.

10. The packaging material according to claim 8, which is used for a package subjected to freezing treatment.

11. A vacuum insulation material comprising the packaging material according to claim 8.
